# EUROPEAN PATENT APPLICATION

(11) **EP 4 840 379 A1**
(43) Date of publication of application: **18.11.2026**
(21) Application number: 25203537.3
(22) Date of filing: 22.09.2025
(51) Int. Cl.: A47L 5/14, A01G 20/47, B25F 5/00

(54) **POWER TOOL AND COMBINATION SWITCH**

(30) Priority: 14.05.2025 CN 202510617498
(71) Applicant: Nanjing Chervon Industry Co., Ltd., Nanjing, Jiangsu 211106 (CN)
(72) Inventor: WU, Xiujian, Nanjing (CN); ZHANG, Wenfei, Nanjing (CN); FENG, Jifeng, Nanjing (CN)
(74) Representative: Sun, Yiming

(57) **Abstract**

Provided is a power tool and a combination switch. The power tool includes a housing; a working head; an electric motor disposed in the housing and used for driving the working head; a control unit for controlling an operation mode of the electric motor, where the operation mode includes at least a constant speed operation mode and a variable speed operation mode; and a first switch unit configured to be operated to trigger the control unit to acquire a first signal. The control unit is configured to, when acquiring the first signal, if the electric motor is in the constant speed operation mode, control the electric motor to switch from a first rotational speed to a second rotational speed, where the second rotational speed is a constant operation speed or the second rotational speed is less than a preset threshold; and if the electric motor is in the variable speed operation mode, control the electric motor to operate at a constant speed in the constant speed operation mode based on the first rotational speed.

## Description

### TECHNICAL FIELD

The present application relates to the technical field of power tool control and, in particular, to a power tool and a combination switch.

### BACKGROUND

Currently, the power tool is generally provided with a main trigger for speed regulation and a button trigger for maintaining a constant speed. The speed regulation control of the main trigger and the constant speed control of the button trigger are independent of each other. After the user adjusts the rotational speed of the electric motor to the ideal rotational speed through the main trigger, the user needs to continue operating the main trigger, leaving the hands unable to be freed. If the user operates the button trigger, the rotational speed of the electric motor changes, making the user experience poor.

This part provides background information related to the present application, and the background information is not necessarily the existing art.

### SUMMARY

An object of the present application is to solve or at least alleviate part or all of the preceding problems. Therefore, an object of the present application is to provide a power tool and a combination switch to flexibly control the rotational speed of an electric motor.

To achieve the preceding object, the present application adopts the technical solutions below.

A combination switch includes a first switch unit and a second switch unit.

The combination switch is configured to perform the following.

When the second switch unit is operated, a second signal is outputted, where the second signal is used for controlling an electric motor to operate in a variable speed operation mode based on a rotational speed corresponding to the second signal.

When the first switch unit is operated, a first signal is outputted, where the first signal is used for performing the following.

If the electric motor is in a constant speed operation mode, the electric motor is controlled to switch from a first rotational speed to a second rotational speed, where the second rotational speed is a constant operation speed or the second rotational speed is less than a preset threshold.

If the electric motor is in the variable speed operation mode, the electric motor is controlled to operate at a constant speed in the constant speed operation mode based on the first rotational speed.

If the electric motor is in a stop state, the electric motor is controlled to operate at a third rotational speed in the constant speed operation mode.

In some examples, the first switch unit and the second switch unit are electrically connected to a control unit of the electric motor separately.

The first switch unit is configured to be operated to output the first signal to the control unit.

The second switch unit is configured to be operated to output the second signal to the control unit.

In some examples, the combination switch further includes an output unit electrically connected to the first switch unit and the second switch unit separately.

The first switch unit is configured to be operated to provide a constant speed signal to the output unit.

The second switch unit is configured to be operated to provide a speed regulation signal to the output unit.

The output unit is configured to output the first signal or the second signal according to the speed regulation signal and/or the constant speed signal.

In some examples, the combination switch further includes a motion sensing unit.

The first switch unit is configured to be operated to generate a first mechanical motion.

The second switch unit is configured to be operated to generate a second mechanical motion.

The motion sensing unit is configured to generate and output the first signal or the second signal based on the first mechanical motion and/or the second mechanical motion.

A power tool includes a housing, a working head, an electric motor, a control unit, and a first switch unit.

The electric motor is disposed in the housing and used for driving the working head.

The control unit is used for controlling an operation mode of the electric motor, where the operation mode includes at least a constant speed operation mode and a variable speed operation mode.

The first switch unit is configured to be operated to trigger the control unit to acquire a first signal.

The control unit is configured to, when acquiring the first signal, perform the following.

If the electric motor is in the constant speed operation mode, the electric motor is controlled to switch from a first rotational speed to a second rotational speed, where the second rotational speed is a constant operation speed or the second rotational speed is less than a preset threshold.

If the electric motor is in the variable speed operation mode, the electric motor is controlled to operate at a constant speed in the constant speed operation mode based on the first rotational speed.

In some examples, the control unit is further configured to perform the following.

When the first signal is acquired, if the electric motor is in a stop state, the electric motor is controlled to operate at a third rotational speed.

In some examples, the power tool is preset with multiple gear rotational speeds with different values.

The second rotational speed is a gear rotational speed, among the multiple gear rotational speeds, that has the smallest difference from the first rotational speed.

In some examples, the first switch unit includes at least a first operating mode and a second operating mode.

In the first operating mode, the second rotational speed is a gear rotational speed, among the multiple gear rotational speeds, that has the smallest difference from the first rotational speed and is greater than the first rotational speed.

In the second operating mode, the second rotational speed is a gear rotational speed, among the multiple gear rotational speeds, that has the smallest difference from the first rotational speed and is less than the first rotational speed.

In some examples, in the first operating mode, if all of the multiple gear rotational speeds are not greater than the first rotational speed, the second rotational speed is zero.

In the second operating mode, if all of the multiple gear rotational speeds are not less than the first rotational speed, the second rotational speed is zero.

In some examples, the multiple gear rotational speeds include at least a normal gear rotational speed and/or an overclocked gear rotational speed.

In some examples, the first switch unit is further configured to be operated in a preset manner to output a setting signal.

The control unit is further configured to, when acquiring the setting signal, add/delete a preset gear rotational speed or modify the value of the preset gear rotational speed based on the current real-time rotational speed of the electric motor.

In some examples, the first switch unit includes multiple switch gears, and each switch gear corresponds to a preset gear rotational speed.

The second rotational speed is a gear rotational speed corresponding to a switch gear indicated by the first signal.

A power tool includes a housing, a working head, an electric motor, a control unit, a first switch unit, and a second switch unit.

The electric motor is disposed in the housing and used for driving the working head.

The control unit is used for controlling an operation mode of the electric motor, where the operation mode includes at least a constant speed operation mode and a variable speed operation mode.

The first switch unit is configured to be operated to trigger the control unit to acquire a first signal.

The second switch unit is configured to be operated to trigger the control unit to acquire a second signal.

The control unit is configured to, when acquiring the first signal, perform the following.

If the electric motor is in the constant speed operation mode, the electric motor is controlled to switch from a first rotational speed to a second rotational speed, where the second rotational speed is a constant operation speed or the second rotational speed is less than a preset threshold.

Moreover, if the electric motor is in the variable speed operation mode, the electric motor is controlled to operate at a constant speed in the constant speed operation mode based on the first rotational speed.

The control unit is configured to, when acquiring the second signal, control the electric motor to operate in the variable speed operation mode based on a rotational speed corresponding to the second signal.

In some examples, the second switch unit is provided with multiple operating strokes, and the multiple operating strokes include at least a speed regulation stroke and a boost stroke.

When the second switch unit is operated in the speed regulation stroke, the rotational speed corresponding to the second signal is monotonically related to the stroke position of a speed regulation switch.

When the second switch unit is operated in the boost stroke, the rotational speed corresponding to the second signal is the maximum allowable rotational speed of the electric motor.

In some examples, the control unit is configured to perform the following.

Within a preset period after the first signal is acquired, the operation of the electric motor is controlled solely based on the first signal.

In some examples, the control unit is configured to perform the following.

In the constant speed operation mode of the electric motor, when the second signal is acquired, a stroke change of the second switch unit is determined according to the second signal.

If the stroke change is less than a preset threshold, the operation state of the electric motor is kept unchanged.

In some examples, the control unit is configured to perform the following.

In the constant speed operation mode of the electric motor, if the rotational speed corresponding to the acquired second signal is less than a preset value, the operation state of the electric motor is kept unchanged.

In some examples, the preset value is 1 to 1.1 times the rotational speed of the electric motor when the second switch unit is operated.

In some examples, the power tool is a handheld power tool.

The present application has the benefits below. The combination switch is configured to output the second signal when the second switch unit is operated so that the electric motor can operate in the variable speed operation mode at a corresponding rotational speed based on the second signal. The combination switch is configured to output the first signal when the first switch unit is operated so that the electric motor can determine the rotational speed in conjunction with the first signal and the state of receiving the first signal. In this manner, the electric motor can switch the first rotational speed to the second rotational speed when receiving the first signal in the constant speed operation mode, can operate at a constant speed based on the first rotational speed when receiving the first signal in the variable speed operation mode, and can operate at the preset third rotational speed when receiving the first signal in the stop state of the electric motor. In this manner, when the electric motor operates at a certain rotational speed in the variable speed operation mode based on the second signal, the electric motor continues operating at a current constant rotational speed by operating the first switch unit so that the control of the first switch unit and the control of the second switch unit are linked to each other, and the rotational speed of the electric motor can be flexibly controlled, which is conducive to improving the user experience.

### BRIEF DESCRIPTION OF DRAWINGS

FIG. 1 is a structural diagram of a combination switch for controlling an electric motor according to the present application.
FIG. 2 is a structural diagram of another combination switch for controlling an electric motor according to the present application.
FIG. 3 is a structural diagram of another combination switch for controlling an electric motor according to the present application.
FIG. 4 is a structural diagram of another combination switch for controlling an electric motor according to the present application.
FIG. 5 is a structural view of a power tool according to the present application.
FIG. 6 is a partial enlarged view of FIG. 5.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

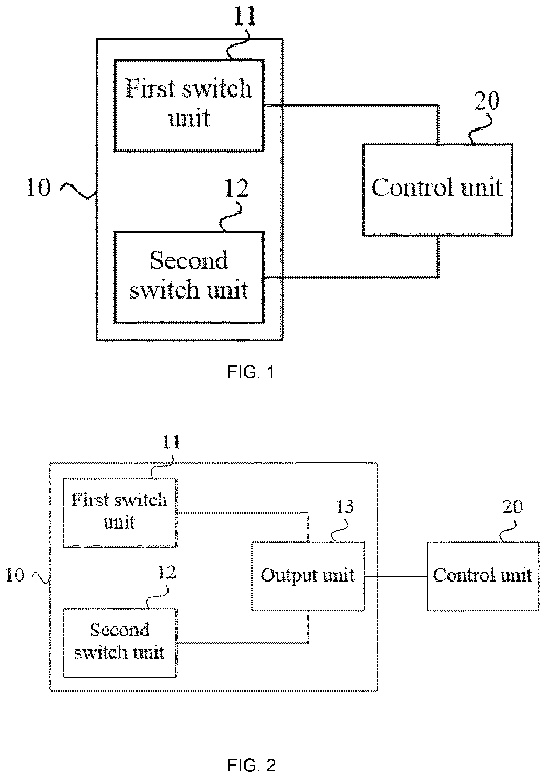

The present application provides a combination switch for controlling an electric motor, and the electric motor has at least two operation modes: a constant speed operation mode and a variable speed operation mode. FIG. 1 is a structural diagram of a combination switch for controlling an electric motor according to the present application. As shown in FIG. 1, a combination switch 10 includes a first switch unit 11 and a second switch unit 12. The combination switch 10 is configured to, when the second switch unit 12 is operated, output a second signal for controlling the electric motor to operate in the variable speed operation mode based on the rotational speed corresponding to the second signal; and when the first switch unit 11 is operated, output a first signal. The first signal is used for, if the electric motor is in the constant speed operation mode, controlling the electric motor to switch from a first rotational speed to a second rotational speed, where the second rotational speed is a constant operation speed or the second rotational speed is a speed less than a preset threshold; if the electric motor is in the variable speed operation mode, controlling the electric motor to operate at a constant speed in the constant speed operation mode based on the current real-time rotational speed; and if the electric motor is in a stop state, controlling the electric motor to operate at a third rotational speed in the constant speed operation mode. The first rotational speed herein refers to a current speed of the electric motor in the constant speed operation mode.

Specifically, the first switch unit 11 may be a constant speed portion of the electric motor and used for controlling the electric motor to operate at a certain constant rotational speed. The second switch unit 12 may be a speed regulation portion 12 of the electric motor and used for regulating the rotational speed of the electric motor. Specifically, when the second switch unit 12 is operated, the combination switch 10 can output the second signal. The second signal indicates that the electric motor is operating in the variable speed operation mode, and the second signal is a changing signal so that different second signals correspond to different rotational speeds of the electric motor. In this manner, when acquiring the second signal, a control unit 20 of the electric motor can control the electric motor to rotate at a corresponding rotational speed according to the current second signal. Furthermore, in the variable speed operation mode, the second signal can be adjusted to change slowly by operating the second switch unit 12, thereby adjusting the rotational speed of the electric motor to make the rotational speed of the electric motor change slowly.

As the constant speed portion of the electric motor, the first switch unit 11 can set the rotational speed gears of the electric motor and stabilize the rotational speed of the electric motor at a constant rotational speed value in conjunction with the current operation mode and the current rotational speed of the electric motor. Specifically, when the first switch unit 11 is operated, the combination switch 10 can output the first signal. When the electric motor is in different operation modes, the constant rotational speeds of the electric motor are different after the first signal is received.

For example, when the combination switch 10 outputs the first signal, if the electric motor is already in the constant speed operation mode, the electric motor is controlled to switch between the rotational speed gears, that is, the electric motor is controlled to switch from the first rotational speed to the second rotational speed. If the electric motor is in the upshift mode and the gear in which the first rotational speed is located is not the highest gear, the second rotational speed after switching is a constant operation speed greater than the first rotational speed. If the gear in which the first rotational speed is located is the highest gear, the second rotational speed after switching may be less than a preset threshold, and the preset threshold may be 1 rad/s. It is to be understood that when the electric motor operates at the maximum gear rotational speed in the upshift mode and receives the first signal, the electric motor is controlled to stop or operate at an extremely low rotational speed. Moreover, if the electric motor is in the downshift mode and the gear in which the first rotational speed is located is not the lowest gear, the second rotational speed after switching is a constant operation speed less than the first rotational speed. If the gear in which the first rotational speed is located is the lowest gear, the second rotational speed after switching may be less than a preset threshold, and the preset threshold may be 1 rad/s. It is to be understood that when the electric motor operates at the lowest gear rotational speed in the downshift mode and receives the first signal, the electric motor is controlled to stop or operate at an extremely low rotational speed.

When the combination switch 10 outputs the first signal, if the electric motor is in the variable speed operation mode, the electric motor is controlled to operate at a constant speed in the constant speed operation mode based on the first rotational speed. It is to be understood that in the case where the electric motor operates in the variable speed operation mode according to the second signal provided by the second switch unit 12, if the first signal is received, the electric motor enters the constant speed operation mode and operates at the real-time constant rotational speed when the first signal is received.

In addition, when the combination switch 10 outputs the first signal, if the electric motor is in the stop state, the electric motor is controlled to operate at the third rotational speed in the constant speed operation mode. The third rotational speed is a preset constant speed. The third rotational speed may be a starting rotational speed of the electric motor. Therefore, when the electric motor is stopped, the electric motor can be controlled to start by operating the first switch unit 11. The third rotational speed may be a low-gear rotational speed, a medium-gear rotational speed, or a high-gear rotational speed, which is not specifically limited in the present application.

In some examples, referring to FIG. 1, the first switch unit 11 and the second switch unit 12 are electrically connected to the control unit 20 of the electric motor separately. The first switch unit 11 is configured to be operated to output the first signal to the control unit 20 during the operation of the electric motor. The second switch unit 12 is configured to be operated to output the second signal to the control unit 20.

Specifically, the first switch unit 11 may be directly electrically connected to the control unit 20 so that when operated, the first switch unit 11 directly outputs the first signal to the control unit 20. In this manner, the control unit 20 controls the operation of the electric motor according to the first signal in a timely manner. Moreover, the second switch unit 12 may be directly electrically connected to the control unit 20 so that when operated, the second switch unit 12 directly outputs the second signal to the control unit 20. In this manner, the control unit 20 controls the operation of the electric motor according to the second signal in a timely manner. The control unit 20 may be a processor, a central processing unit (CPU), or a microcontroller unit (MCU) with a data processing function, which is not specifically limited in the present application.

In some examples, FIG. 2 is a structural diagram of another combination switch for controlling an electric motor according to the present application. As shown in FIG. 2, the combination switch 10 further includes an output unit 13 electrically connected to the first switch unit 11 and the second switch unit 12 separately. The first switch unit 11 is configured to be operated to provide a constant speed signal to the output unit 13. The second switch unit 12 is configured to be operated to provide a speed regulation signal to the output unit 13. The output unit 13 is configured to output the first signal or the second signal according to the speed regulation signal and/or the constant speed signal.

Specifically, the output unit 13 may be a signal processing circuit for processing the signals provided by the first switch unit 11 and the second switch unit 12 and outputting the processing result to the control unit in the form of the first signal or the second signal. In this example, the first switch unit 11 outputs the constant speed signal when operated. The constant speed signal may be an analog signal. The output unit 13 may convert the analog constant speed signal into a digital constant speed signal (that is, the first signal) and output the first signal to the control unit 20 so that the control unit 20 can directly control the operation of the electric motor according to the first signal. Similarly, the second switch unit 12 outputs the analog speed regulation signal when operated. The output unit 13 may convert the analog speed regulation signal into a digital speed regulation signal (that is, the second signal) and output the second signal to the control unit 20 so that the control unit 20 can directly control the operation of the electric motor according to the second signal. In a feasible example, a case where the first switch unit 11 and the second switch unit 12 are operated at the same time or the time interval between the moment when the first switch unit 11 is operated and the moment when the second switch unit 12 is operated is short may exist. In this case, based on the preset circuit processing logic of the output unit 13, the output unit 13 is triggered by the constant speed signal and the speed regulation signal to output the first signal or the second signal, which is not specifically limited in the example of the present application.

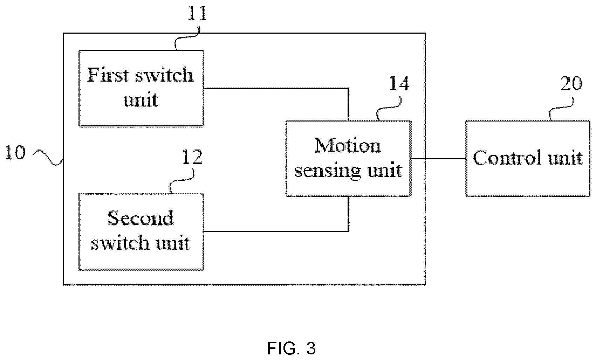

In some examples, FIG. 3 is a structural diagram of another combination switch for controlling an electric motor according to the present application. As shown in FIG. 3, the combination switch 10 further includes a motion sensing unit 14. The first switch unit 11 is configured to be operated to generate a first mechanical motion. The second switch unit 12 is configured to be operated to generate a second mechanical motion. The motion sensing unit 14 is configured to generate and output the first signal or the second signal based on the first mechanical motion and/or the second mechanical motion.

In an example, the motion sensing unit 14 may be a sensing unit capable of detecting the mechanical motions generated by the first switch unit 11 and the second switch unit 12 and may specifically be a Hall sensor, a micro switch, or the like. After detecting the first mechanical motion and/or the second mechanical motion, the motion sensing unit 14 may be triggered to generate the first signal or the second signal.

In another example, the motion sensing unit 14 may be drivingly connected to the first switch unit 11 and the second switch unit 12, that is, the first mechanical motion generated by the first switch unit 11 and the second mechanical motion generated by the second switch unit 12 may cause the motion sensing unit 14 to generate a corresponding linked mechanical motion through the driving connection, and the specific form of the linked mechanical motion is jointly affected by the first mechanical motion and the second mechanical motion. For example, the first switch unit 11 and the second switch unit 12 can adopt the form of a gearset and a locking structure to implement the functions of constant speed and speed regulation. For example, during speed regulation, the angle of rotation of the gearset is positively correlated with the rotational speed change. When the speed is constant, the current angle of rotation of the gearset is locked by the locking structure so that operation at the first rotational speed can be achieved. When the locking structure is operated again, the locking structure triggers the gearset to rotate to a preset angle and then locks the gearset again so that the rotational speed switching in the constant speed operation mode can be achieved through a mechanical transmission structure.

Of course, the motion sensing unit 14 may also be another unit that can convert the mechanical signal into the corresponding electrical signal. In some examples, the motion sensing unit 14 may be formed by a gear combination, a transmission mechanism, and a signal conversion circuit. The present application does not impose any specific limitations on this as long as the corresponding functions can be implemented.

In this example, the first switch unit 11 is operated to output the first mechanical motion, and the motion sensing unit 14 may output the corresponding first signal when receiving the first mechanical motion. Similarly, the second switch unit 12 is operated to output the second mechanical motion, and the motion sensing unit 14 may output the corresponding second signal when receiving the second mechanical motion. In this manner, the signal transmitted to the control unit 20 is an electrical signal so that the control unit 20 can control the operation of the electric motor according to the first signal or the second signal. In a feasible example, a case where the first switch unit 11 and the second switch unit 12 are operated at the same time or the time interval between the moment when the first switch unit 11 is operated and the moment when the second switch unit 12 is operated is short may exist. In this case, the output unit 13 may output the first signal or the second signal in conjunction with the first mechanical motion and the second mechanical motion, which is not specifically limited in the example of the present application.

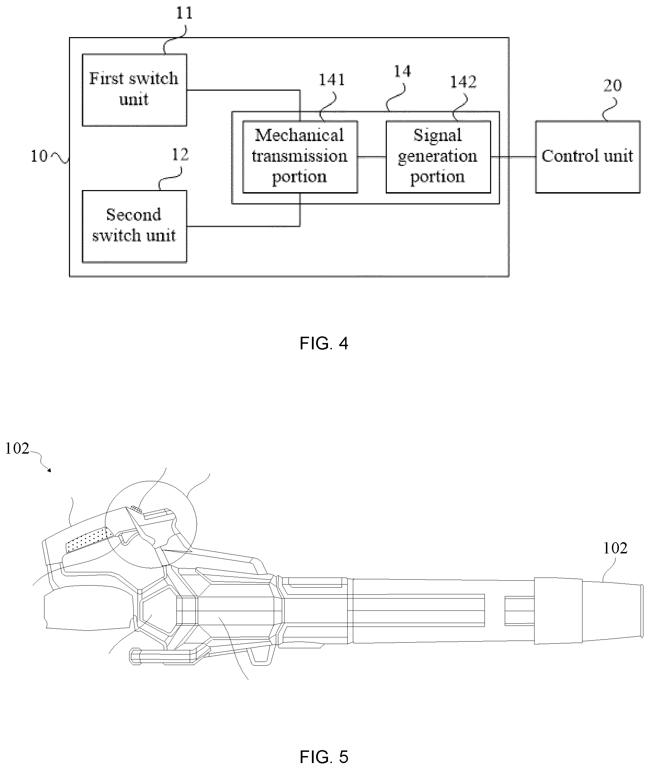

In some examples, FIG. 4 is a structural diagram of another combination switch for controlling an electric motor according to the present application. As shown in FIG. 4, the motion sensing unit 14 includes a mechanical transmission portion 141 and a signal generation portion 142. The mechanical transmission portion 141 is used for transmitting the first mechanical motion to the signal generation portion 142 when the first switch unit 11 outputs the first mechanical motion and transmitting the second mechanical motion to the signal generation portion 142 when the second switch unit 12 outputs the second mechanical motion. The signal generation portion 142 is used for generating the corresponding first signal when receiving the first mechanical motion and generating the corresponding second signal when receiving the second mechanical motion, or the signal generation portion 142 is used for outputting the first signal or the second signal when receiving both the first mechanical motion and the second mechanical motion.

The combination switch provided by the present application includes the first switch unit and the second switch unit. The combination switch is configured to output the second signal when the second switch unit is operated so that the electric motor can operate in the variable speed operation mode at a corresponding rotational speed based on the second signal. The combination switch is configured to output the first signal when the first switch unit is operated so that the electric motor can determine the rotational speed in conjunction with the first signal and the state of receiving the first signal. In this manner, the electric motor can switch the first rotational speed to the second rotational speed when receiving the first signal in the constant speed operation mode, can operate at a constant speed based on the first rotational speed when receiving the first signal in the variable speed operation mode, and can operate at the preset third rotational speed when receiving the first signal in the stop state of the electric motor. In this manner, when the electric motor operates at a certain rotational speed in the variable speed operation mode based on the second signal, the electric motor continues operating at a current constant rotational speed by operating the first switch unit so that the control of the first switch unit and the control of the second switch unit are linked to each other, and the rotational speed of the electric motor can be flexibly controlled, which is conducive to improving the user experience.

Based on the same inventive concept, the present application further provides a power tool. FIG. 5 is a structural view of a power tool according to the present application. As shown in FIG. 5, a power tool 100 includes a housing 101; a working head 102; an electric motor 103 disposed in the housing 101 and used for driving the working head 102; a control unit 20 for controlling the operation mode of the electric motor 103, where the operation mode includes at least a constant speed operation mode and a variable speed operation mode; and a first switch unit 11 configured to be operated to trigger the control unit 20 to acquire a first signal. The control unit 20 is configured to, when acquiring the first signal, if the electric motor 103 is in the constant speed operation mode, control the electric motor 103 to switch from a first rotational speed to a second rotational speed, where the second rotational speed is a constant operation speed or the second rotational speed is less than a preset threshold; and if the electric motor 103 is in the variable speed operation mode, control the electric motor 103 to operate at a constant speed in the constant speed operation mode based on the first rotational speed.

The power tool 100 may be a handheld power tool. The present application exemplarily shows that the power tool 100 is a blower, but is not limited thereto.

The first switch unit 11 may be a constant speed portion of the electric motor and used for controlling the electric motor to operate at a certain rotational speed. When the first switch unit 11 is operated, the control unit 20 can receive the first signal. In different operation modes of the electric motor, the constant rotational speeds of the electric motor are different after the first signal is received. For example, if the control unit 20 acquires the first signal when the electric motor 103 is in the constant speed operation mode, the control unit 20 controls the electric motor 103 to switch from the first rotational speed to the second rotational speed. The second rotational speed is a constant operation speed or the second rotational speed is less than the preset threshold, thereby implementing a rotational speed switching function. If the control unit 20 acquires the first signal when the electric motor 103 is in the variable speed operation mode, the control unit 20 controls the electric motor 103 to operate at a constant speed in the constant speed operation mode based on the first rotational speed.

In some examples, the power tool 100 is preset with multiple gear rotational speeds with different values, and the second rotational speed is a gear rotational speed, among the multiple gear rotational speeds, that has the smallest difference from the first rotational speed. The case where the power tool 100 has a first gear rotational speed, a second gear rotational speed, and a third gear rotational speed that increase in sequence is used as an example. If the control unit 20 receives the first signal when the electric motor 103 operates at a constant rotational speed in the second gear, the second rotational speed after switching may be the third gear rotational speed or the first gear rotational speed.

In some examples, the first switch unit 11 includes at least a first operating mode and a second operating mode. In the first operating mode, the second rotational speed is a gear rotational speed, among the multiple gear rotational speeds, that has the smallest difference from the first rotational speed and is greater than the first rotational speed. In the second operating mode, the second rotational speed is a gear rotational speed, among the multiple gear rotational speeds, that has the smallest difference from the first rotational speed and is less than the first rotational speed.

Specifically, the first operating mode may be an upshift operating mode. In the first operating mode, assuming that when the control unit 20 receives the first signal, the electric motor 103 operates at the second gear rotational speed in the constant speed operation mode, then the second rotational speed after switching may be the third gear rotational speed adjacent to the second gear rotational speed and greater than the second gear rotational speed.

The second operating mode may be a downshift mode. In the second operating mode, assuming that when the control unit 20 receives the first signal, the electric motor 103 operates at the second gear rotational speed in the constant speed operation mode, then the second rotational speed after switching may be the third gear rotational speed adjacent to the second gear rotational speed and less than the second gear rotational speed.

In some examples, in the first operating mode, if all of the multiple gear rotational speeds are not greater than the first rotational speed, the second rotational speed is zero; and in the second operating mode, if all of the multiple gear rotational speeds are not less than the first rotational speed, the second rotational speed is zero.

Specifically, in the first operating mode, if the current constant rotational speed of the electric motor 103 is the highest gear rotational speed, the second rotational speed to which the rotational speed is switched after the first signal is received is zero, and the electric motor 103 is controlled to stop. Similarly, in the second operating mode, if the current constant rotational speed of the electric motor 103 is the lowest gear rotational speed, the second rotational speed to which the rotational speed is switched after the first signal is received is zero, and the electric motor 103 is controlled to stop.

In some examples, the multiple gear rotational speeds include at least a normal gear rotational speed and/or an overclocked gear rotational speed. The overclocked gear rotational speed is the maximum allowable rotational speed of the electric motor. The normal gear rotational speed is lower than the overclocked gear rotational speed, and different normal gear rotational speeds may be set according to design requirements to satisfy diverse application requirements.

In some examples, the first switch unit 11 includes multiple switch gears, each switch gear corresponds to a preset gear rotational speed, and the second rotational speed is a gear rotational speed corresponding to a switch gear indicated by the first signal. The first switch unit 11 may include buttons representing multiple switch gears, with different buttons corresponding to different switch gears, or the first switch unit 11 may be a knob button, with the knob button rotating to different positions corresponding to different switch gears. In this manner, the electric motor 103 can operate at the desired gear rotational speed directly through the first switch unit 11. For example, if the electric motor 103 is currently operating at the first gear rotational speed, the electric motor 103 can switch from the current first gear rotational speed to the third gear rotational speed by operating the first switch unit 11.

In some examples, when the first signal is acquired, if the electric motor 103 is in the stop state, the electric motor 103 is controlled to operate at the third rotational speed. The third rotational speed may be a starting rotational speed of the electric motor. Therefore, when the electric motor is stopped, the electric motor can be controlled to start by operating the first switch unit 11. The third rotational speed may be a low-gear rotational speed, a medium-gear rotational speed, or a high-gear rotational speed, which is not specifically limited in the present application.

In some examples, the first switch unit 11 is further configured to be operated in a preset manner to output a setting signal; and the control unit 20 is further configured to, when acquiring the setting signal, add/delete a preset gear rotational speed or modify the value of the preset gear rotational speed based on the current real-time rotational speed of the electric motor.

Specifically, the first switch unit 11 may be a switch button, and the preset manner may be to operate the first switch unit 11 twice continuously, to operate the first switch unit 11 three times continuously, or the like. In other feasible examples, the preset manner may also be the coordinated operation of the first switch unit 11 and other operating buttons of the power tool 100, for example, the first switch unit 11 and a certain button are pressed at the same time. When the first switch unit 11 is operated in the preset manner, the control unit 20 can acquire the setting signal so that the control unit 20 can set the gear rotational speed of the electric motor, for example, delete or add a certain gear rotational speed or modify the value of a certain gear rotational speed. The preset gear rotational speed may be the current gear rotational speed of the electric motor or the gear rotational speed indicated by the first signal, which is not specifically limited in the present application.

In the power tool provided in the present application, the first switch unit is configured to control the electric motor to operate in the constant speed operation mode; by operating the first switch unit, the constant rotational speed of the electric motor can be switched and the gear rotational speed of the electric motor can be modified so that the diverse application requirements of the power tool can be satisfied, which is conducive to improving the user experience of the power tool.

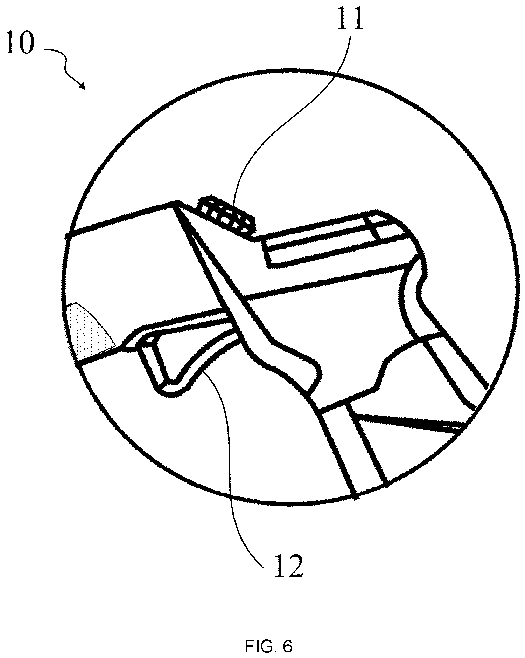

Based on the same inventive concept, the present application further provides a power tool. In conjunction with FIGS. 5 and 6, FIG. 6 is a partial enlarged view of FIG. 5. The power tool 100 includes the housing 101; the working head 102; the electric motor 103 disposed in the housing 101 and used for driving the working head 102; the control unit 20 for controlling the operation mode of the electric motor 103, where the operation mode includes at least the constant speed operation mode and the variable speed operation mode; the first switch unit 11 configured to be operated to trigger the control unit 20 to acquire the first signal; and a second switch unit 12 configured to be operated to trigger the control unit 20 to acquire a second signal. The control unit 20 is configured to, when acquiring the first signal, if the electric motor 103 is in the constant speed operation mode, control the electric motor 103 to switch from the first rotational speed to the second rotational speed, where the second rotational speed is a constant operation speed or the second rotational speed is less than a preset threshold; and if the electric motor 103 is in the variable speed operation mode, control the electric motor 103 to operate at a constant speed in the constant speed operation mode based on the first rotational speed. The control unit 20 is configured to, when acquiring the second signal, control the electric motor 103 to operate in the variable speed operation mode based on a rotational speed corresponding to the second signal.

The power tool 100 may be a handheld power tool. The present application exemplarily shows that the power tool 100 is a blower, but is not limited thereto.

It is to be understood that the switching logics of the first switch unit 11 and the second switch unit 12 may be interrelated, and the rotational speed and operation mode of the electric motor 103 can be controlled by operating the first switch unit 11 and the second switch unit 12. The first switch unit 11 may be a constant speed portion of the electric motor 103 and used for controlling the electric motor 103 to operate at a certain constant rotational speed. The second switch unit 12 may be a speed regulation portion 12 of the electric motor and used for regulating the rotational speed of the electric motor 103. Specifically, when the second switch unit 12 is operated, the control unit 20 can acquire the second signal so that the control unit 20 controls the electric motor 103 to operate in the variable speed operation mode. Moreover, the second signal is a changing signal. In this manner, different second signals correspond to different rotational speeds of the electric motor so that when acquiring the second signal, the control unit 20 can control the electric motor to rotate at a corresponding rotational speed according to the current second signal. Furthermore, in the variable speed operation mode, the second signal can be adjusted to change slowly by operating the second switch unit 12, thereby adjusting the rotational speed of the electric motor to make the rotational speed of the electric motor change slowly.

As the constant speed portion of the electric motor, the first switch unit 11 can set the rotational speed gears of the electric motor and stabilize the rotational speed of the electric motor 103 at a constant rotational speed value in conjunction with the current operation mode and the current rotational speed of the electric motor. Specifically, when the first switch unit 11 is operated, the control unit 20 can acquire the first signal. When the electric motor 103 is in different operation modes, the constant rotational speeds of the electric motor are different after the first signal is received.

For example, when the control unit 20 acquires the first signal, if the electric motor 103 is already in the constant speed operation mode, the electric motor 103 is controlled to switch between the rotational speed gears, that is, the electric motor 103 is controlled to switch from the first rotational speed to the second rotational speed. If the electric motor 103 is in the upshift mode and the gear in which the first rotational speed is located is not the highest gear, the second rotational speed after switching is a constant operation speed greater than the first rotational speed. If the gear in which the first rotational speed is located is the highest gear, the second rotational speed after switching may be less than a preset threshold, and the preset threshold may be 1 rad/s. It is to be understood that when the electric motor 103 operates at the maximum gear rotational speed in the upshift mode and receives the first signal, the electric motor 103 is controlled to stop. Moreover, if the electric motor 103 is in the downshift mode and the gear in which the first rotational speed is located is not the lowest gear, the second rotational speed after switching is a constant operation speed less than the first rotational speed. If the gear in which the first rotational speed is located is the lowest gear, the second rotational speed after switching may be less than a preset threshold, and the preset threshold may be 1 rad/s. It is to be understood that when the electric motor 103 operates at the lowest gear rotational speed in the downshift mode and receives the first signal, the electric motor 103 is controlled to stop.

Moreover, when the control unit 20 acquires the first signal, if the electric motor 103 is in the variable speed operation mode, the control unit 20 controls the electric motor 103 to operate at a constant speed in the constant speed operation mode based on the first rotational speed. It is to be understood that in the case where the electric motor operates in the variable speed operation mode according to the second signal provided by the second switch unit 12, if the first signal is received, the electric motor enters the constant speed operation mode and operates at the real-time constant rotational speed when the first signal is received.

In some examples, the control unit 20 is further configured to, when acquiring the first signal, if the electric motor 103 is in the stop state, control the electric motor 103 to operate at the third rotational speed. The third rotational speed may be a starting rotational speed of the electric motor. Therefore, when the electric motor is stopped, the electric motor can be controlled to start by operating the first switch unit 11. The third rotational speed may be a low-gear rotational speed, a medium-gear rotational speed, or a high-gear rotational speed, which is not specifically limited in the present application.

In some examples, the second switch unit 12 is provided with multiple operating strokes, and the multiple operating strokes include at least a speed regulation stroke and a boost stroke. When the second switch unit 12 is operated in the speed regulation stroke, the rotational speed corresponding to the second signal is monotonically related to the stroke position of a speed regulation switch. When the second switch unit 12 is operated in the boost stroke, the rotational speed corresponding to the second signal is the maximum allowable rotational speed of the electric motor.

Specifically, the second switch unit 12 may be a main trigger of the power tool 10, and the rotational speed of the electric motor 103 may be controlled and adjusted by pressing the main trigger during operation. The operating stroke of the second switch unit 12 may refer to the extent to which the main trigger is pressed. The speed regulation stroke may be the extent to which the second switch unit 12 is pressed within a range of 0 to 70%, which is used for performing stepless speed regulation on the electric motor 103. In the speed regulation stroke, as the extent to which the second switch unit 12 is pressed increases, the rotational speed of the electric motor 103 also increases so that the rotational speed corresponding to the second signal is monotonically related to the stroke position of the speed regulation switch. In an exemplary example, the rotational speed of the electric motor 103 can be adjusted between 13000 rpm and 17000 rpm in the speed regulation stroke. The boost stroke may be the extent to which the second switch unit 12 is pressed within a range of 70% to 100%. In the boost stroke, the electric motor 103 enters the overclocked rotational speed range. Within this stroke range, as the extent to which the second switch unit 12 is pressed increases, the rotational speed of the electric motor 103 remains at the maximum allowable rotational speed of the electric motor and no longer changes.

In some examples, the control unit 20 is configured to control the operation of the electric motor solely based on the first signal within a preset period after the first signal is acquired.

Specifically, the control unit 20 may start timing when acquiring the first signal, ignore the second signal within a preset period after the first signal is acquired, and control the electric motor 103 to operate in the constant speed operation mode solely based on the first signal. In this manner, the following case can be avoided: the electric motor 103 exits the constant speed operation mode due to the generation of the second signal by an accidental touch or release operation (such as releasing the main trigger) on the second switch unit 12 within a short period after the first signal is acquired.

In some examples, the control unit 20 is configured to, in the constant speed operation mode of the electric motor 103, when acquiring the second signal, determine the stroke change of the second switch unit 12 according to the second signal; and if the stroke change is less than a preset threshold, keep the operation state of the electric motor 103 unchanged.

Specifically, when the electric motor 103 is in the constant speed operation mode, the second switch unit 12 may be accidentally touched due to the vibration of the power tool 100. Therefore, in the constant speed operation mode, if it is determined based on the second signal that the stroke change of the second switch unit 12 is relatively small, it can be determined that the second switch unit 12 is accidentally touched. In this case, the second signal generated thereby is ignored, and the operation state of the electric motor is kept unchanged, that is, the electric motor 103 is controlled to continue operating at the current rotational speed in the constant speed operation mode. In this manner, the following case can be avoided: the electric motor 103 exits the constant speed operation mode due to a slight touch on the main trigger in the constant speed operation mode.

In some examples, the control unit 20 is configured to, in the constant speed operation mode of the electric motor 103, if the rotational speed corresponding to the acquired second signal is less than a preset value, keep the operation state of the electric motor 103 unchanged.

Specifically, when the first switch unit 10 is operated, the electric motor 103 enters the constant speed operation mode. Due to the user's operating inertia, the finger may remain in the state of pressing the main trigger (that is, the second switch unit) for a period. After a period, the user may realize that the constant speed operation mode does not require pressing the main trigger and then release the finger, causing the second switch unit to be operated to generate the second signal. In this case, the rotational speed corresponding to the second signal is less than a preset value. Therefore, when the preceding conditions are satisfied, the control unit 20 ignores the second signal generated by the operation and still keeps the operation state of the electric motor 103 unchanged, that is, controls the electric motor 103 to continue operating at the current rotational speed in the constant speed operation mode.

In some examples, the preset value is 1 to 1.1 times the rotational speed of the electric motor 103 when the second switch unit 12 is operated. In this manner, the case where the second signal increases due to the second switch unit 12 being slightly pressed caused by the vibration of the power tool 100 during operation when the second switch unit 12 is released can be avoided so that the case where the power tool 100 exits the constant speed operation mode due to an accidental touch on the second switch unit 12 can be avoided, which is conducive to improving the user experience of the power tool 100.

In some examples, the first switch unit 11 and the second switch unit 12 are operated in a preset manner to output the setting signal; and the control unit 20 is further configured to, when acquiring the setting signal, add/delete a preset gear rotational speed or modify the value of the preset gear rotational speed based on the current real-time rotational speed of the electric motor.

Specifically, in this example, the preset manner may be that the first switch unit 11 and the second switch unit 12 are pressed simultaneously. When the first switch unit 11 and the second switch unit 12 are operated in the preset manner, the control unit 20 can acquire the setting signal so that the control unit 20 can set the gear rotational speed of the electric motor, for example, delete or add a certain gear rotational speed or modify the value of a certain gear rotational speed. The preset gear rotational speed may be the current gear rotational speed of the electric motor or the gear rotational speed indicated by the first signal, which is not specifically limited in the present application.

In the power tool provided in the present application, the first switch unit is configured to control the electric motor to operate in the constant speed operation mode, the second switch unit is configured to control the electric motor to operate in the variable speed operation mode, the constant rotational speed of the electric motor can be switched by operating the first switch unit, and the control of the first switch unit and the control of the second switch unit can be linked to each other so that the rotational speed of the electric motor can be flexibly controlled. Moreover, by restricting the second signal, the case where the electric motor exits the constant speed operation mode due to misoperation can be avoided. Therefore, the diverse application requirements of the power tool can be satisfied, which is conducive to improving the user experience of the power tool.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool (100), comprising:
a housing (101);
a working head (102);
an electric motor (103) disposed in the housing and used for driving the working head;
a control unit (20) for controlling an operation mode of the electric motor, the operation mode comprises at least a constant speed operation mode and a variable speed operation mode; and
a first switch unit (11) configured to be operated to trigger the control unit to acquire a first signal;
wherein the control unit is configured to, when acquiring the first signal,
if the electric motor is in the constant speed operation mode, control the electric motor to switch from a first rotational speed to a second rotational speed, wherein the second rotational speed is a constant operation speed or the second rotational speed is a speed less than a preset threshold; and
if the electric motor is in the variable speed operation mode, control the electric motor to operate at a constant speed in the constant speed operation mode based on the first rotational speed.

2. The power tool of claim 1, wherein the control unit is further configured to:
when acquiring the first signal, if the electric motor is in a stop state, control the electric motor to operate at a third rotational speed.

3. The power tool of claim 1, wherein the power tool is preset with a plurality of gear rotational speeds with different values; and the second rotational speed is a gear rotational speed that has a smallest difference from the first rotational speed among the plurality of gear rotational speeds.

4. The power tool of claim 3, wherein the first switch unit comprises at least a first operating mode and a second operating mode;
wherein in the first operating mode, the second rotational speed is a gear rotational speed that has the smallest difference from the first rotational speed and is greater than the first rotational speed among the plurality of gear rotational speeds; and
in the second operating mode, the second rotational speed is a gear rotational speed that has the smallest difference from the first rotational speed and is less than the first rotational speed among the plurality of gear rotational speeds.

5. The power tool of claim 4, wherein in the first operating mode, if all of the gear rotational speeds are not greater than the first rotational speed, the second rotational speed is zero; and in the second operating mode, if all of the gear rotational speeds are not less than the first rotational speed, the second rotational speed is zero.

6. The power tool of claim 3, wherein the multiple gear rotational speeds include at least a normal gear rotational speed and/or an overclocked gear rotational speed.

7. The power tool of claim 3, wherein the first switch unit is further configured to be operated in a preset manner to output a setting signal;
the control unit is further configured to, when acquiring the setting signal, add/delete a preset gear rotational speed or modify the value of the preset gear rotational speed based on the current real-time rotational speed of the electric motor.

8. The power tool of claim 1, wherein the first switch unit includes multiple switch gears, and each switch gear corresponds to a preset gear rotational speed, the second rotational speed is a gear rotational speed corresponding to a switch gear indicated by the first signal.

9. The power tool of claim 1, wherein comprising a second switch unit configured to be operated to trigger the control unit to acquire a second signal;
when acquiring the first signal, the control unit is configured to:
if the electric motor is in the constant speed operation mode, control the electric motor to switch from a first rotational speed to a second rotational speed, wherein the second rotational speed is a constant operation speed or the second rotational speed is a speed less than a preset threshold; and
if the electric motor is in the variable speed operation mode, control the electric motor to operate at a constant speed in the constant speed operation mode based on the first rotational speed;
when acquiring the second signal, the control unit is configured to:
control the electric motor to operate in the variable speed operation mode based on a rotational speed corresponding to the second signal.

10. The power tool of claim 9, wherein the second switch unit is provided with multiple operating strokes, and the multiple operating strokes include at least a speed regulation stroke and a boost stroke; when the second switch unit is operated in the speed regulation stroke, the rotational speed corresponding to the second signal is monotonically related to the stroke position of a speed regulation switch; when the second switch unit is operated in the boost stroke, the rotational speed corresponding to the second signal is the maximum allowable rotational speed of the electric motor.

11. The power tool of claim 9, wherein when the electric motor in the constant speed operation mode, the control unit is configured to determine a stroke change of the second switch unit according to the second signal when the second signal is acquired, and keep the electric motor in the operation state if the stroke change is less than a preset threshold.

12. The power tool of claim 9, wherein when a preset period after the first signal is acquired, the control unit is configured to control the operation of the electric motor solely based on the first signal.

13. The power tool of claim 1, wherein when the electric motor is in the constant speed operation mode, the control unit is configured to keep the operation state of the electric motor if the rotational speed corresponding to the acquired second signal is less than a preset value.

14. The power tool of claim 1, wherein, the preset value is 1 to 1.1 times the rotational speed of the electric motor when the second switch unit is operated.

15. The power tool of claim 1, wherein the control unit is configured to: when acquiring the first signal, if the electric motor is in a stop state, controlling the electric motor to operate at a third rotational speed in the constant speed operation mode.

## Amended claims

### Amended claims in accordance with Rule 137(2) EPC.

1. A power tool (100), comprising:
a housing (101);
a working head (102);
an electric motor (103) disposed in the housing and used for driving the working head;
a control unit (20) for controlling an operation mode of the electric motor, the operation mode comprises at least a constant speed operation mode and a variable speed operation mode; and
a first switch unit (11) configured to be operated to trigger the control unit to acquire a first signal;
wherein the control unit is configured to, when acquiring the first signal,
if the electric motor is in the constant speed operation mode, control the electric motor to switch from a first rotational speed to a second rotational speed, wherein the second rotational speed is a constant operation speed or the second rotational speed is a speed less than a preset threshold; and
if the electric motor is in the variable speed operation mode, control the electric motor to operate at a constant speed in the constant speed operation mode based on the first rotational speed;
wherein the control unit is further configured to:
when acquiring the first signal, if the electric motor is in a stop state, control the electric motor to operate at a third rotational speed.

2. The power tool of claim 1, wherein the power tool is preset with a plurality of gear rotational speeds with different values; and the second rotational speed is a gear rotational speed that has a smallest difference from the first rotational speed among the plurality of gear rotational speeds.

3. The power tool of claim 2, wherein the first switch unit comprises at least a first operating mode and a second operating mode;
wherein in the first operating mode, the second rotational speed is a gear rotational speed that has the smallest difference from the first rotational speed and is greater than the first rotational speed among the plurality of gear rotational speeds; and
in the second operating mode, the second rotational speed is a gear rotational speed that has the smallest difference from the first rotational speed and is less than the first rotational speed among the plurality of gear rotational speeds.

4. The power tool of claim 3, wherein in the first operating mode, if all of the gear rotational speeds are not greater than the first rotational speed, the second rotational speed is zero; and in the second operating mode, if all of the gear rotational speeds are not less than the first rotational speed, the second rotational speed is zero.

5. The power tool of claim 2, wherein the multiple gear rotational speeds include at least a normal gear rotational speed and/or an overclocked gear rotational speed.

6. The power tool of claim 2, wherein the first switch unit is further configured to be operated in a preset manner to output a setting signal;
the control unit is further configured to, when acquiring the setting signal, add/delete a preset gear rotational speed or modify the value of the preset gear rotational speed based on the current real-time rotational speed of the electric motor.

7. The power tool of claim 1, wherein the first switch unit includes multiple switch gears, and each switch gear corresponds to a preset gear rotational speed, the second rotational speed is a gear rotational speed corresponding to a switch gear indicated by the first signal.

8. The power tool of claim 1, wherein comprising a second switch unit configured to be operated to trigger the control unit to acquire a second signal;
when acquiring the first signal, the control unit is configured to:
if the electric motor is in the constant speed operation mode, control the electric motor to switch from a first rotational speed to a second rotational speed, wherein
the second rotational speed is a constant operation speed or the second rotational speed is a speed less than a preset threshold; and
if the electric motor is in the variable speed operation mode, control the electric motor to operate at a constant speed in the constant speed operation mode based
on the first rotational speed;
when acquiring the second signal, the control unit is configured to:
control the electric motor to operate in the variable speed operation mode based on a rotational speed corresponding to the second signal.

9. The power tool of claim 8, wherein the second switch unit is provided with multiple operating strokes, and the multiple operating strokes include at least a speed regulation stroke and a boost stroke; when the second switch unit is operated in the speed regulation stroke, the rotational speed corresponding to the second signal is monotonically related to the stroke position of a speed regulation switch; when the second switch unit is operated in the boost stroke, the rotational speed corresponding to the second signal is the maximum allowable rotational speed of the electric motor.

10. The power tool of claim 8, wherein when the electric motor in the constant speed operation mode, the control unit is configured to determine a stroke change of the second switch unit according to the second signal when the second signal is acquired, and keep the electric motor in the operation state if the stroke change is less than a preset threshold.

11. The power tool of claim 8, wherein when a preset period after the first signal is acquired, the control unit is configured to control the operation of the electric motor solely based on the first signal.

12. The power tool of claim 1, wherein when the electric motor is in the constant speed operation mode, the control unit is configured to keep the operation state of the electric motor if the rotational speed corresponding to the acquired second signal is less than a preset value.

13. The power tool of claim 1, wherein, the preset value is 1 to 1.1 times the rotational speed of the electric motor when the second switch unit is operated.

14. The power tool of claim 1, wherein the control unit is configured to: when acquiring the first signal, if the electric motor is in a stop state, controlling the electric motor to operate at a third rotational speed in the constant speed operation mode.
